# FASCICULE DE BREVET EUROPEEN

(11) **EP 1 759 125 B1**
(45) Date de publication et mention de la délivrance du brevet: **21.04.2010**
(21) Numéro de dépôt: 05778831.7
(22) Date de dépôt: 22.06.2005
(51) Int. Cl.: F16C 23/08, F16C 19/55, B01F 11/00, B01F 15/00

(54) **DISPOSITIF DE GUIDAGE D'UN ARBRE EN MOUVEMENT OSCILLANT**
VORRICHTUNG ZUR SCHAFTFÜHRUNG BEI OSZILLATIONSBEWEGUNGEN
DEVICE FOR GUIDING A SHAFT IN AN OSCILLATING MOVEMENT

(30) Priorité: 23.06.2004 FR 0406850; 13.12.2004 FR 0413235
(43) Date de publication de la demande: 07.03.2007
(73) Titulaire: Bertin Technologies, 78180 Montigny-le-Bretonneux (FR)
(72) Inventeur: BOQUET Jean, F-78610 LE PERRAY EN YVELINES (FR); MOINE Jean-Marc, F-78450 VILLEPREUX (FR)
(74) Mandataire: Ramey, Daniel
(86) Numéro de dépôt international: PCT/FR2005/001580
(87) Numéro de publication internationale: WO 2006/008397

(56) Documents cités:
- WO-A2-2004/012851
- FR-A- 874 119
- FR-A- 2 843 047
- US-A- 2 648 391
- US-A- 2 767 037
- US-A- 3 749 371
- US-A- 3 934 957
- US-A- 4 424 718
- US-A- 5 567 050
- PATENT ABSTRACTS OF JAPAN vol. 010, no. 033 (M-452), 8 février 1986 (1986-02-08) & JP 60 188617 A (KAWASAKI SEITETSU KK), 26 septembre 1985 (1985-09-26)

## Description

L'invention concerne un dispositif de guidage d'un arbre en mouvement oscillant autour d'un point situé sur l'axe de l'arbre, ce dispositif étant en particulier applicable à la vibration rapide de tubes contenant des échantillons biologiques, pour le broyage de ces échantillons au moyen de microbilles de verre ou de céramique qui sont contenues dans les tubes avec les échantillons.

On connaît, notamment par le document WO 2004/012851 de la demanderesse, un appareil qui comprend un plateau support de tubes, monté à une extrémité d'un arbre guidé en mouvement oscillant sur un support fixe et entraîné par son autre extrémité qui est montée dans un palier excentré porté par l'arbre de sortie d'un moteur électrique.

Le dispositif de guidage décrit dans ce document antérieur comprend un ensemble de deux paliers concentriques dont l'un est un palier à rotule et l'autre un roulement à billes, le palier à rotule étant monté sur l'arbre et à l'intérieur du roulement à billes tandis que le roulement à billes est monté entre le palier à rotule et le support fixe.

Ce dispositif de guidage connu est très performant : la vitesse de rotation de l'arbre de sortie du moteur électrique peut être comprise entre 6500 et 8000 tours par minute environ en régime normal (tes échantillons dans les tubes étant alors soumis à des accélérations d'environ 600 à 800 g) et sa durée de vie est supérieure à plusieurs milliers de cycles de fonctionnement de 45 secondes toutes les deux minutes.

Dans ce dispositif connu, le palier à rotule comprend une bague cylindrique interne emmanchée sur l'arbre portant le plateau et deux couronnes de billes agencées entre cette bague et une bague externe à surface interne sphérique en contact avec les billes, qui sont guidées et maintenues dans deux gorges semi-cylindriques de la surface extérieure de la bague interne.

Un inconvénient de ce dispositif connu est le faible débattement angulaire possible de l'arbre et du plateau, qui est égal dans les paliers à rotule disponibles dans le commerce à environ 4 degrés de part et d'autre d'une position médiane, ce qui limite la course des tubes portés par le plateau. Pour augmenter cette course et donc l'accélération à laquelle les échantillons contenus dans les tubes sont soumis, il faut augmenter la distance entre les tubes et l'axe de l'arbre, ce qui augmente le diamètre utile du plateau et donc sa masse et l'énergie nécessaire pour l'entraîner en mouvement oscillant.

Le document FR 874 119 décrit un dispositif de guidage d'un arbre en mouvement oscillant avec les caractéristiques du préambule de la revendication 1.

La présente invention a pour but de perfectionner ce dispositif de guidage connu, de façon notamment à augmenter le débattement angulaire autorisé de l'arbre de part et d'autre d'une position médiane ou à réduire le diamètre du plateau.

Elle propose à cet effet un dispositif de guidage d'un arbre en mouvement oscillant autour d'un centre de rotation situé sur l'axe de l'arbre, ce dispositif comprenant un palier à rotule et un roulement à billes montés l'un à l'intérieur de l'autre entre l'arbre et un support fixe et étant caractérisé en ce que le palier à rotule comprend une rotule à surface extérieure convexe en portion de sphère formant la bague interne du palier et deux couronnes de billes qui sont agencées entre la rotule et deux bagues externes superposées du palier et qui sont guidées dans des gorges ou rainures annulaires semi-cylindriques des bagues.

Cette disposition de la rotule entre deux couronnes de billes superposées permet d'augmenter le débattement angulaire autorisé de la rotule de part et d'autre d'une position médiane tout en évitant d'appliquer un couple de rotation à un plateau porté par l'arbre quand celui-ci est entraîné en mouvement oscillant autour du centre de rotation.

Les billes de chaque couronne de billes du palier à rotule sont logées dans des orifices circulaires d'une cage cylindrique montée entre la rotule et une bague cylindrique externe du palier à rotule.

Dans un mode de réalisation préféré de l'invention, la rotule est montée fixement sur l'arbre et deux roulements à billes superposés sont montés entre le support fixe et les bagues externes superposées du palier à rotule.

Dans ce cas, avantageusement, les bagues externes du palier à rotule sont formées par les bagues internes des roulements à billes entourant le palier à rotule.

Selon une autre caractéristique de l'invention, les deux bagues externes superposées du palier à rotule et les deux roulements à billes superposés sont sensiblement adjacents axialement et séparés par une rondelle de matériau élastiquement déformable, tel que du caoutchouc ou analogue.

Le dispositif selon l'invention comprend avantageusement des moyens de réglage de la distance axiale entre les deux roulements, ces moyens de réglage comprenant par exemple un écrou vissé sur le support fixe et prenant appui sur un des roulements, tandis que l'autre roulement est en appui sur le support fixe.

Cette disposition permet de régler de façon précise le jeu de fonctionnement de la rotule.

Lorsque ce réglage a été effectué, l'écrou vissé sur le support fixe est bloqué en rotation par des moyens appropriés.

Dans un autre mode de réalisation de l'invention, la disposition décrite ci-dessus est inversée et le palier à rotule est autour d'un roulement à billes porté par l'arbre, et se trouve entre le support fixe et le roulement à billes.

Dans ce cas, la rotule du palier à rotule est solidaire en rotation de la bague externe du roulement à billes dont la bague interne est montée fixe en rotation sur l'arbre. Les deux bagues externes du palier à rotule sont montées fixement sur le support fixe.

Ces deux bagues externes sont séparées axialement par une rondelle de caoutchouc ou analogue, et leur distance, déterminant le jeu de fonctionnement de la rotule, est réglée par les mêmes moyens que ceux du premier mode de réalisation, ces moyens comprenant une pièce annulaire vissée sur le support fixe et s'appuyant sur l'une des deux bagues externes, l'autre bague externe étant en appui sur le support fixe.

Dans cette variante de réalisation, les dimensions de la rotule sont plus importantes que dans le premier mode de réalisation, mais le principe de fonctionnement reste le même.

L'invention s'applique en particulier mais non exclusivement à un dispositif de vibration rapide de tubes contenant des échantillons biologiques, ce dispositif comprenant un plateau support de tubes qui est monté sur une extrémité de l'arbre précité dont l'autre extrémité est reliée à des moyens d'entraînement et est montée dans un palier excentré porté par l'arbre de sortie d'un moteur.

De préférence, ce palier excentré est porté par un disque qui est monté dans une boîte à roulements portée par le support fixe, ce disque étant relié à l'arbre de sortie du moteur par un accouplement élastique.

Pour que ce dispositif soit peu bruyant, afin de ne pas causer une gêne et une fatigue, par exemple lorsqu'il est utilisé dans un laboratoire où se trouvent des personnes qui exécutent des travaux demandant une certaine concentration, des moyens d'absorption du bruit et des vibrations sont montés entre le support fixe et les moyens de guidage et d'entraînement de l'arbre précité.

Dans un mode de réalisation préféré de l'invention, ces moyens d'absorption du bruit et des vibrations comprennent des bagues en élastomère ayant une dureté Shore A comprise entre 55 et 85 et de préférence voisine de 70.

On a constaté que le montage de ces bagues en élastomère entre le support fixe et les moyens de guidage et d'entraînement de l'arbre permettait de réduire le niveau de bruit et de vibrations en fonctionnement d'environ 5 à 10 dB, de sorte que le dispositif est maintenant très peu bruyant en fonctionnement et ne constitue plus une cause de gêne ou de fatigue qui nuirait à la concentration des personnes travaillant à son voisinage immédiat.

Dans ce mode de réalisation préféré, un excentrique qui relie une extrémité de l'arbre à ses moyens d'entraînement est guidé en rotation dans un roulement porté par une platine qui est elle-même montée par l'intermédiaire d'une bague précitée en élastomère dans un logement cylindrique du support fixe.

Les moyens de guidage de l'arbre du plateau comprenant le palier à rotule et les roulements à billes sont montés à l'intérieur d'une douille métallique elle-même fixée dans un alésage d'une pièce fixe par une bague précitée en élastomère.

Une autre bague en élastomère est montée entre cette pièce fixe et le support fixe de l'appareil.

Selon encore une autre caractéristique de l'invention, les moyens précités d'absorption du bruit et des vibrations comprennent également des moyens de suspension élastique d'une partie supérieure du dispositif, comprenant au moins les moyens de centrage et de guidage de l'arbre, sur une partie inférieure du dispositif, comprenant le support fixe et les moyens d'entraînement de l'arbre.

Ces moyens de suspension élastique sont avantageusement du type à cales ou blocs d'élastomère ou à câbles et permettent de filtrer les vibrations basse fréquence et moyenne fréquence au démarrage et à l'arrêt du moteur d'entraînement de l'arbre, tandis que les bagues précitées en élastomère filtrent efficacement les fréquences plus élevées générées en fonctionnement continu.

De façon générale, ces bagues en élastomère et ces moyens de suspension permettent de réduire de façon importante le niveau sonore généré par l'appareil en fonctionnement, sans nuire à la précision du centrage et du guidage de l'arbre du plateau et sans réduire la durée de vie des moyens de centrage et de guidage.

Des moyens d'amortissement du type « silent block » sont également prévus entre le dispositif et ses pieds d'appui sur un support, pour amortir les vibrations à très basse fréquence qui peuvent apparaître au démarrage et à l'arrêt du moteur.

L'invention sera mieux comprise et d'autres caractéristiques, détails et avantages de celle-ci apparaîtront plus clairement à la lecture de la description qui suit faite à titre d'exemple en référence aux dessins annexés dans lesquels :
- la figure 1 est une vue schématique partielle en coupe axiale d'un appareil de vibration rapide de tubes comportant un dispositif selon l'invention ;
- la figure 2 est une vue schématique de face d'une variante de cet appareil ;
- la figure 3 est une vue à plus grande échelle et en coupe axiale de la partie supérieure de l'appareil de la figure 2.

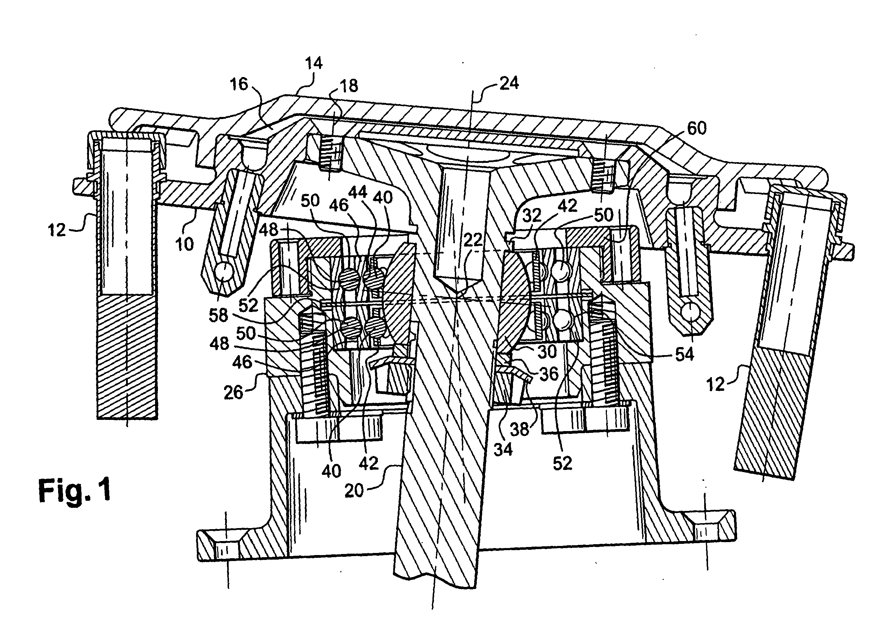

L'appareil représenté en figure 1 comprend essentiellement un plateau 10 portant à sa périphérie des tubes 12 destinés à contenir des échantillons biologiques pour leur broyage au moyen de microbilles de verre ou de céramique, le plateau 10 étant équipé d'un couvercle 14 de maintien des tubes 12, ce couvercle 14 étant appliqué sur le plateau 10 par une dépression dans une chambre 16 délimitée entre les parties centrales du plateau 10 et du couvercle 14, comme décrit en détail dans le document WO 2004/012851 précité.

Le plateau 10 est fixé par des vis 18 sur une extrémité supérieure d'un arbre 20 dont l'extrémité inférieure (non représentée) est reliée à des moyens d'entraînement du type de ceux décrits dans le document WO 2004/012851, ces moyens comprenant un palier excentré qui reçoit l'extrémité l'inférieure de l'arbre 20 et qui est monté sur un disque entraîné en rotation par l'arbre de sortie d'un moteur électrique, le disque étant monté sur cet arbre de sortie par l'intermédiaire d'une suspension élastique.

De façon connue, ces moyens permettent d'entraîner l'arbre 20 en mouvement oscillant autour d'un centre de rotation 22 qui est situé sur l'axe 24 de l'arbre 20, à l'intersection de cet axe et de l'axe du disque portant le palier excentré recevant l'extrémité inférieure de l'arbre 20.

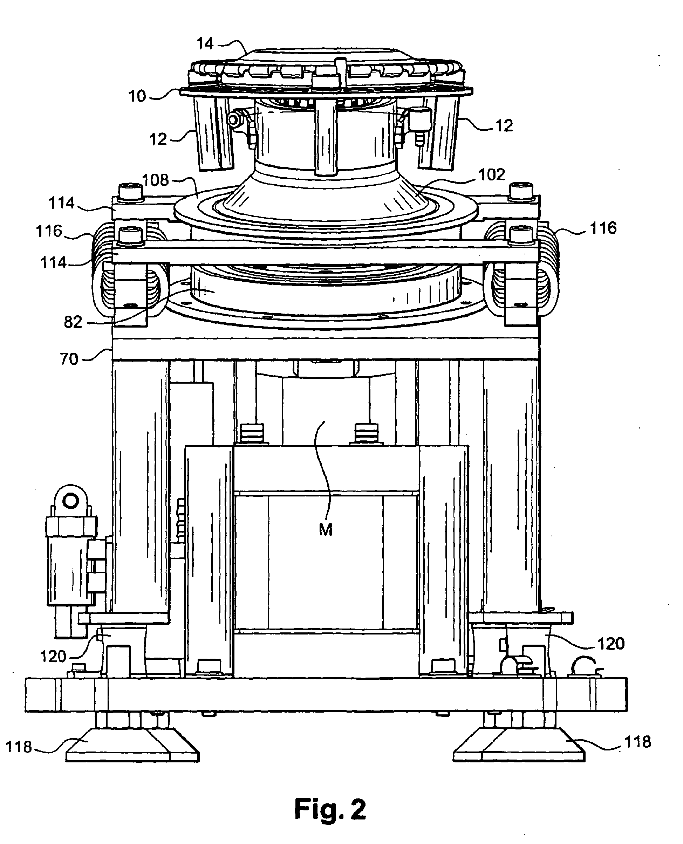

Les moyens de guidage de l'arbre 20 en mouvement oscillant autour du entre de rotation 22 sont portés par une couronne 26 qui est elle-même montée sur un support fixe par des moyens de suspension élastiques non représentés et qui seront décrits en référence à la figure 2.

Les moyens de guidage de l'arbre 20 comprennent un palier à rotule monté sur l'arbre 20 et deux roulements à billes superposés montés autour du palier à rotule, entre celui-ci et la couronne 26.

Le palier à rotule comprend une rotule 30 qui est emmanchée à force sur la partie supérieure de l'arbre 20 et qui est maintenue en appui sur un épaulement 32 de cet arbre par un écrou 34 vissé sur l'arbre et prenant appui sur une extrémité de la rotule par l'intermédiaire d'une rondelle d'appui 36 et d'une rondelle frein 38. La rondelle frein 38 est immobilisée en rotation autour de l'axe 24 de l'arbre 20 par un ergot de sa surface cylindrique interne, engagé dans une rainure longitudinale de la surface cylindrique de l'arbre 20 comme représenté au dessin.

La surface radialement extérieure de la rotule 30 est convexe et forme un segment de sphère ayant un angle au centre d'environ 90 degrés, sur lequel deux couronnes de billes 40 sont appliquées de façon symétrique de part et d'autre du centre de rotation 22, les billes de chaque couronne étant retenues par une cage cylindrique 42 qui comporte des orifices dans lesquels sont engagées les billes 40, celles-ci étant de plus retenues et guidées dans un chemin de roulement formé par une gorge ou rainure annulaire semi-cylindrique 44 de la surface interne d'une bague cylindrique 46 qui entoure la couronne de billes 40 correspondante. Les cages 42 sont maintenues axialement et radialement dans la position représentée, par les billes 40 engagées dans les orifices des cages 42 et dans les rainures 44.

Les bagues 46 qui forment les bagues externes du palier à rotule forment également les bagues internes des deux roulements à billes qui sont montés autour de ce palier à rotule et elles comprennent chacune à cet effet, dans leur surface cylindrique extérieure, une rainure semi-cylindrique 48 dans laquelle sont engagées les billes 50 du roulement à billes correspondant, celui-ci comportant une bague externe 52 dont la surface cylindrique interne est formée avec une rainure semi-cylindrique 54 de guidage et de maintien des billes 50.

Les bagues extérieures 52 des roulements à bille sont emmanchées à l'intérieur de la couronne 26 et sont solidaires en rotation de celle-ci.

Les deux roulements à billes superposés sont séparés axialement d'une faible distance déterminée par une rondelle mince 58 de matière élastiquement déformable telle que du caoutchouc ou un élastomère par exemple, qui est interposée entre les bagues externes 52 des deux roulements à billes.

La bague externe 52 du roulement à billes inférieur est en appui sur un épaulement de la surface interne de la couronne 26 et un écrou 60 est vissé sur la partie supérieure de la couronne 26 et prend appui sur la bague externe 52 du roulement à billes supérieur, le vissage de l'écrou 60 permettant de régler la distance axiale entre les deux roulements et donc le jeu de fonctionnement de la rotule.

En pratique, on commence par visser l'écrou 60 au maximum sur la partie supérieure de la couronne 26 pour sensiblement annuler ce jeu de fonctionnement en poussant l'une vers l'autre les deux couronnes de billes 40 qui sont en appui sur la rotule, puis on dévisse légèrement l'écrou 60 pour assurer un jeu de fonctionnement sur la rotule 30 qui est par exemple compris entre 0,05 et 0,1 millimètre et on immobilise l'écrou 60 en rotation par rapport à la couronne 26 par tout moyen approprié, par exemple par déformation plastique d'un rebord périphérique mince de cet écrou.

En variante, les deux roulements sont montés dans une cage comportant en partie supérieure des ergots qui sont rabattus pour maintenir les roulements en bonne position à l'écartement nécessaire au bon fonctionnement de la rotule.

Par ailleurs, on prévoit avantageusement des cales anti-bruit en élastomère ou analogue aux interfaces entre les composants métalliques, pour diminuer le bruit en fonctionnement à vitesse élevée.

En fonctionnement, l'arbre 20 est entraîné à grande vitesse en mouvement oscillant autour du point 22 sans pouvoir tourner autour de son axe 24, la rotation du plateau 10 autour de cet axe étant interdite par des moyens reliant ce plateau à la couronne 26 ou au châssis fixe de l'appareil, d'une façon bien connue de l'homme du métier et par exemple comme décrit dans le document WO 2004/012851 précité.

Le déplacement à grande vitesse de l'arbre 20 en mouvement oscillant se traduit par une rotation à grande vitesse des bagues 46 par rapport à la rotule 30 qui est fixe en rotation sur l'arbre 20 et par rapport aux bagues extérieures 52 des roulements à billes qui sont fixes en rotation sur la couronne 26.

Le dispositif selon l'invention permet d'augmenter le débattement angulaire de l'arbre 20 de part et d'autre d'une position médiane, ce débattement angulaire pouvant être de 8° ou davantage dans l'exemple de réalisation représenté. Ce débattement angulaire est déterminé d'une part par la dimension axiale de la rotule (ou dimension de la portion de sphère selon l'axe de l'arbre 20) et d'autre part par la distance axiale entre les deux couronnes de billes 40. Le doublement du débattement angulaire par rapport à la réalisation décrite dans le document WO 2004/012851 permet de réduire de moitié le diamètre extérieur du plateau 10 tout en conservant la même course de déplacement des tubes 12 en mouvement alternatif curviligne et donc les mêmes performances de vibration rapide des tubes 12 et de broyage des échantillons biologiques contenus dans ces tubes.

La diminution du diamètre du plateau 10 se traduit par une réduction de son poids et par une réduction de l'énergie nécessaire à l'entraînement de ce plateau.

Par ailleurs, le dispositif de guidage de l'arbre 20 selon l'invention présente de nombreux avantages :
On peut utiliser une rotule 30 du commerce, et les rainures annulaires 44 dans lesquelles sont guidées les billes 40 en appui sur la rotule 30, sont usinées avec une précision « normale » de l'ordre du micron dans des bagues internes de roulements standards disponibles dans le commerce.

Le dispositif de guidage selon l'invention est donc relativement simple et peu coûteux. De plus, le jeu de fonctionnement de la rotule 30 est réglable, ce qui permet d'assurer un fonctionnement optimal avec une rotule du commerce dont on ne connaît pas a priori la dimension précise et sans qu'il soit nécessaire d'usiner avec une très grande précision les rainures 44 de guidage des billes 40.

Comme indiqué plus haut, la disposition relative du palier à rotule et du roulement à billes peut être inversée, le palier à rotule se trouvant alors entre le support fixe et un roulement à billes monté sur l'arbre 20.

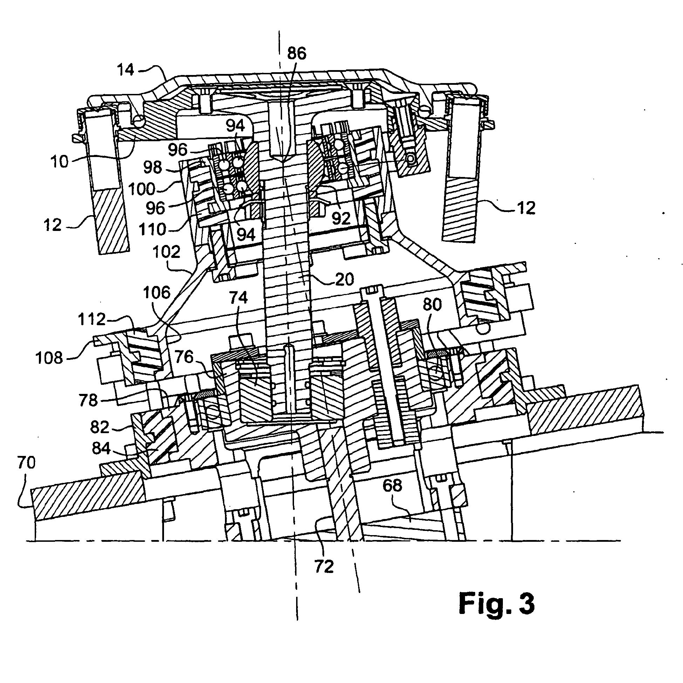

L'appareil représenté en figures 2 et 3 est également un appareil pour la vibration rapide de tubes 12 destinés à contenir des échantillons biologiques et des micro-billes de verre ou de céramique, les tubes 12 étant portés par un plateau 10 muni d'un couvercle 14 et monté fixement à l'extrémité supérieure d'un arbre 20 qui s'étend axialement par rapport au plateau 10 et au couvercle 14.

L'arbre 20 est entraîné par un moteur électrique M situé sous le plateau 10 et porté par un châssis fixe 70.

L'extrémité inférieure de l'arbre 20 est reliée à l'arbre de sortie 72 du moteur M par un excentrique 76 comprenant un roulement 74 monté au bout de l'arbre 20 et logé dans une cavité cylindrique de l'excentrique lui-même monté et guidé dans une cavité cylindrique d'une platine 78 par l'intermédiaire d'un roulement 80. La platine 78 est montée dans une bague métallique 82 fixée au chassis fixe 70, par l'intermédiaire d'une bague en élastomère 84 qui est interposée entre la périphérie extérieure de la platine 78 et la bague métallique 82 et qui est immobilisée en translation axiale est en rotation sur la bague métallique 82 et sur la platine 78.

Avantageusement, la bague 84 en élastomère est coulée et vulcanisée in situ ou bien est collée sur la platine 78 et sur la bague métallique 82. De plus, comme représenté, une nervure annulaire peut être formée en saillie sur la surface interne de la bague métallique 82 et engagée dans une rainure correspondante de la bague en élastomère 84 qui comprend elle-même sur sa surface interne une partie annulaire en saillie engagée dans une rainure correspondante de la périphérie extérieure de la platine 78, pour accroître la résistance à l'arrachement axial.

Le logement cylindrique de montage du roulement 74 dans le disque 76 est excentré et orienté en oblique par rapport à l'axe de l'arbre 72 de sortie du moteur M, et les axes des arbres 20 et 72 se coupent en un point 86 qui constitue un centre de rotation du plateau 10 et de l'arbre 20.

Les moyens de centrage et de guidage de l'arbre 20 sont situés au niveau de ce centre de rotation 86 et comprennent un palier à rotule et à billes, dont la rotule 92 est solidaire de l'arbre 20 et coopère avec deux couronnes de billes 94 portées par des cages cylindriques et montées entre la rotule 92 et deux bagues cylindriques externes axialement superposées, qui constituent également les bagues internes de deux roulements à billes 96 axialement superposés et séparés d'une distance faible.

Les deux roulements à billes 96 sont montés dans une bague métallique externe 98 elle-même montée dans un manchon cylindrique supérieur 100 porté par une pièce fixe 102 dont l'extrémité cylindrique inférieure 106 est fixée dans une couronne métallique 108 qui est semblable à la bague métallique 82 précitée et qui est axialement alignée avec celle-ci.

Des bagues en élastomère 110 et 112 sont interposées respectivement entre la bague métallique 98 portant les roulements 96 et le manchon 100 et entre l'extrémité inférieure 106 de la pièce 102 et la couronne 108. Ces bagues en élastomère 110 et 112 sont coulées et vulcanisées in situ ou collées et de plus retenues axialement par emboîtement sur des nervures des pièces extérieures et dans des rainures des pièces intérieures avec lesquelles elles coopèrent, comme déjà décrit pour la bague en élastomère 84 de montage de la platine 78.

Ces trois bagues en élastomère 84, 110 et 112 ont pour fonction essentielle d'interdire la transmission des bruits et des vibrations de fréquence élevée entre les moyens de guidage et d'entraînement du plateau 10, d'une part, et le châssis fixe 70, d'autre part. Pour bien assurer cette absorption de bruits et de vibrations, ces bagues sont en élastomère ayant une dureté Shore A comprise entre 55 et 85 environ, et de préférence voisine de 70.

La couronne 108 est portée (figure 2) par deux poutres parallèles 114 reliées à leurs extrémités au châssis 70 par des moyens de suspension élastique 116 qui sont ici du type à câbles enroulés en hélice et qui pourraient en variante comprendre des cales ou des blocs d'élastomère. Ces moyens 116 de suspension élastique ont pour fonction de filtrer les vibrations basse fréquence et moyenne fréquence qui sont générées au démarrage et à l'arrêt du moteur M, lorsque sa vitesse de rotation passe de 0 à 7000 tours/minute environ, et inversement.

Grâce à cet ensemble de moyens, le niveau sonore de l'appareil en fonctionnement est réduit d'au moins 5 à 10 dB, de sorte que l'appareil en fonctionnement ne constitue plus une gêne pour son environnement immédiat.

Le châssis 70 de l'appareil est relié à des pieds 118 d'appui sur une surface de support par des moyens d'amortissement du type « silent block » qui amortissent les vibrations à très basse fréquence susceptibles de se produire à l'arrêt et au démarrage du moteur M.

Le montage des bagues insonorisantes 84, 110 et 112 et des moyens de suspension 116 n'affecte pas les performances de l'appareil qui peut fonctionner avec des vitesses de rotation élevées comprises entre 6000 et 8000 tours/minute et dont les moyens de centrage et de guidage ont une très longue durée de vie.

## Revendications

1. Dispositif de guidage d'un arbre en mouvement oscillant autour d'un centre de rotation situé sur l'axe de l'arbre, comprenant un palier à rotule et un roulement à billes montés l'un à l'intérieur de l'autre entre l'arbre et un support fixe, où le palier à rotule (30, 40, 46, 92, 94), comprend une rotule (30, 92) à surface extérieure convexe en portion de sphère, formant la bague interne du palier, et deux couronnes de billes (40, 94) qui sont agencées entre la rotule (30, 92) et deux bagues externes (46) superposées du palier, **caractérisé en ce que** les deux couronnes de billes (40,94) sont guidées dans des gorges ou rainures annulaires semi-cylindriques (44) desdites bagues (46).

2. Dispositif selon la revendication 1, **caractérisé en ce que** les billes (40, 94) de chaque couronne sont logées dans des orifices d'une cage cylindrique (42) agencée entre la rotule (30, 92) et la bague externe (46) correspondante du palier à rotule.

3. Dispositif selon l'une des revendications précédentes, **caractérisé en ce que** la rotule (30, 92) est montée fixement sur l'arbre (20) et deux roulements à billes sensiblement superposés (50, 52; 96, 98) sont montés entre le support fixe (26 ; 100, 102) et le palier à rotule.

4. Dispositif selon la revendication 3 **caractérisé en ce que** les bagues cylindriques externes (46) du palier à rotule sont formées par les bagues cylindriques internes des roulements à billes (50, 52 ; 96, 98).

5. Dispositif selon l'une des revendications précédentes, **caractérisé en ce que** les deux couronnes de billes (40, 94) du palier à rotule sont disposées de façon symétrique par rapport au centre de rotation (22) de l'arbre (20).

6. Dispositif selon l'une des revendications précédentes, **caractérisé en ce que** le débattement angulaire de l'arbre (20) autour du centre de rotation (22) est d'environ 8 degrés ou davantage de part et d'autre d'une position médiane.

7. Dispositif selon l'une des revendications 1 à 6, **caractérisé en ce que** les deux bagues externes (46) du palier à rotule sont sensiblement adjacentes et séparées par une rondelle (58) de matériau élastiquement déformable.

8. Dispositif selon l'une des revendications 1 à 7, **caractérisé en ce qu'**il comprend des moyens (60) de réglage de la distance axiale entre les deux bagues externes (46) superposées.

9. Dispositif selon la revendication 8, **caractérisé en ce que** les moyens de réglage comprennent un écrou (60) vissé sur le support fixe (26) et prenant appui sur une bague externe précitée, tandis que l'autre bague externe est en appui sur le support fixe (26).

10. Dispositif selon la revendication 9, **caractérisé en ce qu'**il comprend des moyens d'immobilisation en rotation de l'écrou (60) après réglage de la distance axiale entre les deux bagues externes.

11. Dispositif selon l'une des revendications précédentes, **caractérisé en ce que** l'arbre (20) porte un plateau (10) de support de tubes à échantillons biologiques (12) à l'une de ses extrémités et est relié à des moyens d'entraînement par son autre extrémité montée dans un palier excentré porté par l'arbre de sortie d'un moteur.

12. Dispositif selon l'une des revendications précédentes, **caractérisé en ce que** des moyens (84, 110, 112) d'absorption du bruit et des vibrations sont montés entre un châssis fixe (70) et les moyens de guidage et d'entraînement de l'arbre (20).

13. Dispositif selon la revendication 12, **caractérisé en ce que** les moyens d'absorption du bruit et des vibrations comprennent des bagues en élastomère (84, 110, 112).

14. Dispositif selon la revendication 13, **caractérisé en ce que** les bagues (84, 110, 112) sont en élastomère ayant une dureté Shore A comprise entre 55 et 85.

15. Dispositif selon la revendication 14, **caractérisé en ce que** les bagues (84, 110, 112) sont en élastomère ayant une dureté Shore A voisine de 70.

16. Dispositif selon l'une des revendications 13 à 15, **caractérisé en ce qu'**un excentrique (74, 76) reliant une extrémité de l'arbre (20) à un arbre moteur (72) est guidé en rotation dans un roulement (80) monté dans une platine (78) qui est elle-même montée par l'intermédiaire d'une bague précitée (84) en élastomère sur le châssis fixe (70).

17. Dispositif selon l'une des revendications 13 à 16, **caractérisé en ce que** le palier à rotule et les roulements à billes (92, 94, 96) de guidage de l'arbre sont montés à l'intérieur d'une bague métallique (98) elle-même fixée dans un manchon cylindrique (100) par une bague précitée (110) en élastomère.

18. Dispositif selon la revendication 17, **caractérisé en ce qu'**une bague (112) en élastomère est montée entre une pièce fixe (102) portant le manchon (100) et une couronne (108) reliée au châssis fixe (70).

19. Dispositif selon l'une des revendications 13 à 18, **caractérisé en ce que** les bagues précitées (84, 110, 112) en élastomère sont immobilisées en translation sur les pièces entre lesquelles elles sont montées.

20. Dispositif selon l'une des revendications 13 à 19, **caractérisé en ce que** les bagues en élastomère (84, 110, 112) sont coulées et vulcanisées in situ ou collées sur les pièces entre lesquelles elles sont montées.

21. Dispositif selon l'une des revendications 12 à 20, **caractérisé en ce que** les moyens d'absorption du bruit et des vibrations comprennent également des moyens (116) de suspension élastique d'une partie supérieure du dispositif, comprenant au moins le palier et les roulements (92, 94, 96) de centrage et de guidage de l'arbre (20), sur une partie inférieure du dispositif, comprenant le châssis fixe (70) et des moyens (M, 72) d'entraînement de l'arbre (20).

22. Dispositif selon la revendication 21, **caractérisé en ce que** les moyens (76) de suspension élastique sont du type à cales ou blocs d'élastomère ou à câbles pour l'amortissement des basses et moyennes fréquences lors des phases d'arrêt et de démarrage d'un moteur (M) d'entraînement de l'arbre (20).

## Claims

1. A device for guiding a shaft in an oscillating movement about a center of rotation situated on the axis of the shaft, comprising a ball-and-socket bearing and a ball bearing mounted one inside the other between the shaft and a fixed support, the ball-and-socket bearing (30, 40, 46, 92, 94) comprising a ball-and-socket joint (30, 92) with an outer convex surface in a portion of a sphere forming the inner race of the bearing, and two rings of balls (40, 94) that are arranged between the ball-and-socket joint (30, 92) and two superposed outer races (46) of the bearing, **characterized in that** the two rings of balls (40, 94) are guided in semicylindrical annular slots or grooves (44) of said races (46).

2. The device as claimed in claim 1, **characterized in that** the balls (40, 94) of each ring are housed in orifices of a cylindrical cage (42) arranged between the ball-and-socket joint (30, 92) and the corresponding outer race (46) of the ball-and-socket bearing.

3. The device as claimed in one of the preceding claims, **characterized in that** the ball-and-socket joint (30, 92) is fixedly mounted on the shaft (20) and two substantially superposed ball bearings (50, 52, 96, 98) are mounted between the fixed support (26 ; 100, 102) and the ball-and-socket bearing.

4. The device as claimed in claim 3, **characterized in that** the outer cylindrical races (46) of the ball-and-socket bearing are formed by the inner cylindrical races of the ball bearings (50, 52, 96, 98).

5. The device as claimed in one of the preceding claims, **characterized in that** the two rings of balls (40, 94) of the ball-and-socket bearing are placed symmetrically relative to the center of rotation (22) of the shaft (20).

6. The device as claimed in one of the preceding claims, **characterized in that** the angular range of movement of the shaft (20) about the center of rotation (22) is approximately 8 degrees or more on either side of a mid-position.

7. The device as claimed in one of claims 1 to 6, **characterized in that** the two outer races (46) of the ball-and-socket bearing are substantially adjacent and separated by a shim (58) made of elastically deformable material.

8. The device as claimed in one of claims 1 to 7, **characterized in that** it comprises means (60) for adjusting the axial distance between the two superposed outer races (46).

9. The device as claimed in claim 8, **characterized in that** the adjustment means comprise a nut (60) screwed onto the fixed support (26) and pressing on an aforementioned outer race, while the other outer race is pressing on the fixed support (26).

10. The device as claimed in claim 9, **characterized in that** it comprises means for stopping the nut (60) rotating after the axial distance between the two outer races has been adjusted.

11. The device as claimed in one of the preceding claims, **characterized in that** the shaft (20) supports a plate (10) for supporting biological sample tubes (12) at one of its ends and is connected to drive means via its other end mounted in an eccentric bearing supported by the output shaft of a motor.

12. The device as claimed in one of the preceding claims, **characterized in that** means (84, 110, 112) for damping noise and vibrations are mounted between a fixed frame (70) and the means for guiding and driving the shaft (20).

13. The device as claimed in claim 12, **characterized in that** the means for damping noise and vibrations comprise elastomer rings (84, 110, 112).

14. The device as claimed in claim 13, **characterized in that** the rings (84, 110, 112) are made of elastomer having a Shore A hardness lying between 55 and 85.

15. The device as claimed in claim 14, **characterized in that** the rings (84, 110, 112) are made of elastomer having a Shore A hardness of approximately 70.

16. The device as claimed in one of claims 13 to 15,
**characterized in that** an eccentric (74, 76) connecting one end of the shaft (20) to a drive shaft (72) is guided in rotation in an antifriction bearing (80) mounted in a plate (78) that is itself mounted by means of an aforesaid elastomer ring (84) on the fixed frame (70).

17. The device as claimed in one of claims 13 to 16, **characterized in that** the ball-and-socket bearing and the ball bearings (92, 94, 96) for guiding the shaft are mounted inside a metal race (98) itself attached to a cylindrical sleeve (100) by an aforementioned elastomer ring (110).

18. The device as claimed in claim 17, **characterized in that** an elastomer ring (112) is mounted between a fixed part (102) supporting the sleeve (100) and an annulus (108) connected to the fixed frame (70).

19. The device as claimed in one of claims 13 to 18, **characterized in that** the aforementioned elastomer rings (84, 110, 112) are immobilized in translation on the parts between which they are mounted.

20. The device as claimed in one of claims 13 to 19, **characterized in that** the elastomer rings (84, 110, 112) are cast and vulcanized in situ or bonded to the parts between which they are mounted.

21. The device as claimed in one of claims 12 to 20, **characterized in that** the noise and vibration damping means also comprise means (116) for elastically suspending an upper portion of the device, comprising at least the bearing and the antifriction bearings (92, 94, 96) for centering and guiding the shaft (20) on a lower portion of the device, comprising the fixed frame (70) and means (M, 72) for driving the shaft (20).

22. The device as claimed in claim 21, **characterized in that** the elastic suspension means (76) are of the type with elastomer stops or blocks or with cables for the absorption of the low and medium frequencies during the shutdown and startup phases of a motor (M) for driving the shaft (20).

## Patentansprüche

1. Vorrichtung zur Führung einer Welle in Oszillationsbewegung um ein Rotationszentrum, das auf der Wellenachse gelegen ist, umfassend ein Gelenklager und ein Kugellager, die ineinander zwischen der Welle und einem festen Träger angebracht sind, wobei das Gelenklager (30, 40, 46, 92, 94) ein Kugelgelenk (30, 92) mit konvexer Außenfläche in Form eines Kugelsegments, das den Innenring des Lagers bildet, und zwei Kugelkränze (40, 94) umfasst, die zwischen dem Kugelgelenk (30, 92) und zwei übereinanderliegenden Außenringen (46) des Lagers eingesetzt sind, **dadurch gekennzeichnet, dass** die beiden Kugelkränze (40, 94) in halbzylindrischen ringförmigen Rillen oder Nuten (44) der Ringe (46) geführt sind.

2. Vorrichtung nach Anspruch 1, **dadurch gekennzeichnet, dass** die Kugeln (40, 94) jedes Kranzes in Öffnungen eines zylindrischen Käfigs (42) untergebracht sind, der zwischen dem Kugelgelenk (30, 92) und dem zugehörigen Außenring (46) des Gelenklagers eingesetzt sind.

3. Vorrichtung nach einem der vorhergehenden Ansprüche, **dadurch gekennzeichnet, dass** das Kugelgelenk (30, 92) fest an der Welle (20) angebracht ist und zwei im Wesentlichen übereinanderliegende Kugellager (50, 52; 96, 98) zwischen dem festen Träger (26; 100, 102) und dem Gelenklager angebracht sind.

4. Vorrichtung nach Anspruch 3, **dadurch gekennzeichnet, dass** die zylindrischen Außenringe (46) des Gelenklagers von den zylindrischen Innenringen der Kugellager (50, 52; 96, 98) gebildet sind.

5. Vorrichtung nach einem der vorhergehenden Ansprüche, **dadurch gekennzeichnet, dass** die beiden Kugelkränze (40, 94) des Gelenklagers symmetrisch zum Rotationszentrum (22) der Welle (20) angeordnet sind.

6. Vorrichtung nach einem der vorhergehenden Ansprüche, **dadurch gekennzeichnet, dass** der Winkelausschlag der Welle (20) um das Rotationszentrum (22) ungefähr 8 Grad oder mehr zu beiden Seiten einer mittleren Position beträgt.

7. Vorrichtung nach einem der Ansprüche 1 bis 6, **dadurch gekennzeichnet, dass** die beiden Außenringe (46) des Gelenklagers im Wesentlichen benachbart und durch eine Scheibe (58) aus elastisch verformbarem Material getrennt liegen.

8. Vorrichtung nach einem der Ansprüche 1 bis 7, **dadurch gekennzeichnet, dass** sie Mittel (60) zum Einstellen des axialen Abstands zwischen den beiden übereinanderliegenden Außenringen (46) umfasst.

9. Vorrichtung nach Anspruch 8, **dadurch gekennzeichnet, dass** die Einstellmittel eine auf den festen Träger (26) geschraubte Mutter (60) umfassen und an einem genannten Außenring anliegen, während der andere Außenring am festen Träger (26) anliegt.

10. Vorrichtung nach Anspruch 9, **dadurch gekennzeichnet, dass** sie Mittel umfasst, um die Mutter (60) nach Einstellen des axialen Abstands zwischen den beiden Außenringen drehsicher festzulegen.

11. Vorrichtung nach einem der vorhergehenden Ansprüche, **dadurch gekennzeichnet, dass** die Welle (20) an einem ihrer Enden eine Trägerplatte (10) für Röhrchen mit biologischen Proben (12) aufweist und an ihren anderen Ende, das in einem von der Abtriebswelle eines Motors getragenen exzentrischen Lager angebracht ist, mit Antriebsmitteln verbunden ist.

12. Vorrichtung nach einem der vorhergehenden Ansprüche, **dadurch gekennzeichnet, dass** Mittel (84, 110, 112) zur Dämpfung von Schall und Vibrationen zwischen einem festen Rahmen (70) und den Führungs- und Antriebsmitteln der Welle (20) angebracht sind.

13. Vorrichtung nach Anspruch 12, **dadurch gekennzeichnet, dass** die Mittel zur Dämpfung von Schall und Vibrationen elastomere Ringe (84, 110, 112) umfassen.

14. Vorrichtung nach Anspruch 13, **dadurch gekennzeichnet, dass** die Ringe (84, 110, 112) aus einem Elastomer mit einer Shore A-Härte zwischen 55 und 85 gebildet sind.

15. Vorrichtung nach Anspruch 14, **dadurch gekennzeichnet, dass** die Ringe (84, 110, 112) aus einem Elastomer mit einer Shore A-Härte im Bereich von 70 gebildet sind.

16. Vorrichtung nach einem der Ansprüche 13 bis 15, **dadurch gekennzeichnet, dass** ein Exzenter (74, 76), der ein Ende der Welle (20) mit einer Motorwelle (72) verbindet, drehbar in einem Lager (80) geführt ist, das in einer Platte (78) angebracht ist, die ihrerseits unter Zwischenfügen eines genannten Rings (84) aus Elastomer an dem festen Rahmen (70) angebracht ist.

17. Vorrichtung nach einem der Ansprüche 13 bis 16, **dadurch gekennzeichnet, dass** das Gelenklager und die Kugellager (92, 94, 96) zur Führung der Welle im Inneren eines Metallrings (98) angebracht sind, der seinerseits durch einen genannten elastomeren Ring (110) in einem zylindrischen Stutzen (100) befestigt ist.

18. Vorrichtung nach Anspruch 17, **dadurch gekennzeichnet, dass** ein elastomerer Ring (112) zwischen einem festen Teil (102), das den Stutzen (100) trägt, und einem Kranz (108), der mit dem festen Rahmen (70) verbunden ist, angebracht ist.

19. Vorrichtung nach einem der Ansprüche 13 bis 18, **dadurch gekennzeichnet, dass** die genannten elastomeren Ringe (84, 110, 112) auf den Teilen, zwischen denen sie angebracht sind, verschiebesicher festgelegt sind.

20. Vorrichtung nach einem der Ansprüche 13 bis 19, **dadurch gekennzeichnet, dass** die elastomeren Ringe (84, 110, 112) auf die Teile, zwischen denen sie angebracht sind, in situ angeformt und vulkanisiert oder geklebt sind.

21. Vorrichtung nach einem der Ansprüche 12 bis 20, **dadurch gekennzeichnet, dass** die Mittel zur Dämpfung von Schall und Vibrationen gleichermaßen Mittel (116) zur elastischen Aufhängung eines oberen Abschnitts der Vorrichtung umfassen, die mindestens das Gelenk und die Lager (92, 94, 96) zum Zentrieren und Führen der Welle (20) aufweisen, die auf einem unteren Abschnitt der Vorrichtung den festen Rahmen (70) und Mittel (M, 72) zum Antrieb der Welle (20) umfassen.

22. Vorrichtung nach Anspruch 21, **dadurch gekennzeichnet, dass** die Mittel (76) zur elastischen Aufhängung in der Art von elastomeren Klötzen oder Blöcken oder Strängen zur Dämpfung von Bässen und mittleren Frequenzen in Phasen des Anhaltens und des Starts eines Motors (M) zum Antrieb der Welle (20) gebildet sind.
